# EUROPEAN PATENT SPECIFICATION

(11) **EP 2 770 560 B1**
(45) Date of publication and mention of the grant of the patent: **03.02.2016**
(21) Application number: 13181777.7
(22) Date of filing: 27.08.2013
(51) Int. Cl.: H01M 4/139, H01M 4/1397, H01M 4/62, H01M 4/04

(54) **Method of manufacturing battery electrode**
Verfahren zur Herstellung einer Batterieelektrode
Procédé de fabrication d'électrode de batterie

(30) Priority: 20.02.2013 JP 2013030759
(43) Date of publication of application: 27.08.2014
(73) Proprietor: SHOWA DENKO K.K., Tokyo 105-8518 (JP)
(72) Inventor: Nakamura, Takeshi, Tokyo, 105-8518 (JP); Ishii, Nobuaki, Tokyo, 105-8518 (JP); Hirano, Yuta, Tokyo, 105-8518 (JP)
(74) Representative: Strehl Schübel-Hopf & Partner

(56) References cited:
- EP-A2- 2 682 517
- EP-A2- 2 682 518
- US-A1- 2011 163 274
- US-A1- 2012 214 070
- US-A1- 2013 004 657
- "KUREHA KF POLYMER High-performance Binder for Electrode", , 28 August 2012 (2012-08-28), XP055116166, Retrieved from the Internet: URL:http://www.kureha.co.jp/development/st ory/pdf/catalog_kf_eg_20120924.pdf [retrieved on 2014-05-02]

## Description

### TECHNICAL FIELD

The present invention relates to a method of manufacturing a battery electrode. More specifically, the present invention relates to a method of manufacturing an electrode used for a lithium ion battery.

### BACKGROUND ART

Various methods of manufacturing electrode materials and electrodes have been proposed in order to improve the high current load characteristics of lithium ion batteries. For example, Patent Literature 1 discloses a method of manufacturing a negative electrode material for a lithium ion battery, the method comprising:
producing a composite by attaching a granulated graphite-like material to a fibrous graphite material using an adhesive agent comprising a carbonaceous material and/or a low crystalline graphite material, and mixing the composite with a binder such as poly(vinylidene fluoride) and a liquid medium such as N-methylpyrrolidone using a homomixer.
Patent Literature 2 discloses a method of manufacturing a negative electrode composition for a lithium secondary battery, the method comprising:
   mixing a negative electrode material-containing aqueous thickener composition comprising natural graphite or artificial graphite, an aqueous thickener solution, and a water dispersion of styrene-butadiene rubber with a carbon fiber-containing composition in which vapor grown carbon fibers having the mean fiber diameter of 1 to 200 nm is dispersed in an aqueous thickener solution.

Patent Literature 3 discloses a method of manufacturing an electrode for a lithium ion battery, the method comprising: preparing a fluid dispersion comprising fine fibrous carbon having a diameter of less than 100 nm fragmented by applying shear stress, fibrous carbon having a diameter of 100 nm or more and/or non-fibrous electrically conductive carbon; mixing the fluid dispersion with an active material to prepare an electrode coating fluid dispersion; and applying the electrode coating fluid dispersion.

Further, Patent Literature 4 discloses a method of manufacturing an electrode for a lithium ion battery, the method comprising: mixing an active material with carbon fibers by dry process to obtain a dry mixture; mixing the dry mixture, a binder-containing solution or fluid dispersion and a solvent to prepare an electrode forming material; and applying the electrode forming material to a current collector.

US 2012/214070 A1 discloses an electrode for a lithium battery produced by dry mixing an electrode active material, vapor grown carbon fibers and acetylene back, adding a binder polymer dissolved in NMP, i.e. in the form of a liquid medium, and kneading, wherein the amount of added liquid medium is 29 % by weight.

US 2013/0004657 A1 discloses a method of producing an electrode comprising mixing carbon nanotubes, dispersant and polymeric binders, mixing this composition with a lithium ion battery electrode material and coating the resultant onto an electrical conductor.

### CITATION LIST

### PATENT LITERATURE

Patent Literature 1: JP 2005-019399 A
Patent Literature 2: JP 2007-042620 A
Patent Literature 3: JP 2010-238575 A
Patent Literature 4: JP 2009-016265 A

### SUMMARY OF INVENTION

### TECHNICAL PROBLEM

An object of the present invention is to provide a method of manufacturing a battery electrode having small electric resistance which can confer excellent rate characteristics on a battery.

### SOLUTION TO PROBLEM

Carbon fibers having a fiber diameter of not less than 5 nm and not more than 40 nm are easily entangled to form aggregates. Even if the carbon fibers are strongly kneaded in a liquid dispersion, the entangled state is not untangled, and the carbon fibers are also present as aggregates in an electrode. Accordingly, the present inventors found that the entangled state of carbon fibers having a fiber diameter of not less than 5 nm and not more than 40 nm can be untangled such that almost no aggregates of the carbon fibers are observed in an electrode, and a battery electrode having small electric resistance which can confer excellent rate characteristics on a battery can be provided by mixing an active material (A), carbon fibers (B) with a fiber diameter of not less than 50 nm and not more than 300 nm, carbon fibers (C) with a fiber diameter of not less than 5 nm and not more than 40 nm, carbon black (D) and a binder (E) by dry process; and then to the dry process mixture, adding a small amount of a liquid medium to perform kneading.

That is, the present invention includes the following aspects.
[1] A method of manufacturing a battery electrode, the method comprising:
   mixing an active material (A), carbon fibers (B) with a fiber diameter of not less than 50 nm and not more than 300 nm, carbon fibers (C) with a fiber diameter of not less than 5 nm and not more than 40 nm, carbon black (D) and a binder (E) by dry process to obtain a mixture,
   to the mixture, adding not less than 5/95 and not more than 20/80 by mass of a liquid medium relative to the total mass of the active material (A), the carbon fibers (B), the carbon fibers (C), the carbon black (D) and the binder (E), kneading the mixture to which the liquid medium has been added to obtain a kneaded material, and
   shaping the kneaded material into a sheet form.
[2] The manufacturing method according to [1], further comprising: adding another (or further) liquid medium to the obtained kneaded material and performing kneading before shaping the kneaded material into a sheet form.
[3] The manufacturing method according to [1] or [2], wherein the amount of the carbon fibers (C) is not less than 10 % by mass and not more than 70 % by mass in the total amount of 100 % by mass of the carbon fibers (B) and the carbon fibers (C).
[4] The manufacturing method according to any one of [1] to [3], wherein the amount of the active material (A) to be contained in the electrode is not less than 85 % by mass and not more than 95 % by mass relative to the mass of the electrode.
[5] The manufacturing method according to any one of [1] to [4], wherein the amount of the carbon fibers (B) is not less than 0.5 part by mass and not more than 20 parts by mass relative to 100 parts by mass of the active material (A).
[6] The manufacturing method according to any one of [1] to [5], wherein the amount of the carbon fibers (C) is not less than 0.1 part by mass and not more than 10 parts by mass relative to 100 parts by mass of the active material (A).
[7] The manufacturing method according to any one of [1] to [6], wherein the amount of the carbon black (D) is not less than 1 parts by mass and not more than 10 parts by mass relative to 100 parts by mass of the active material (A).
[8] The manufacturing method according to any one of [1] to [7], wherein the amount of the binder (E) which can be contained in the electrode is not less than 3 % by mass and not more than 5 % by mass relative to the mass of the electrode.

### ADVANTAGEOUS EFFECT OF INVENTION

According to the manufacturing method in the present invention, an electrode having small electric resistance can be obtained. A lithium ion battery obtained using the electrode will have excellent rate characteristics.

### BRIEF DESCRIPTION OF DRAWINGS

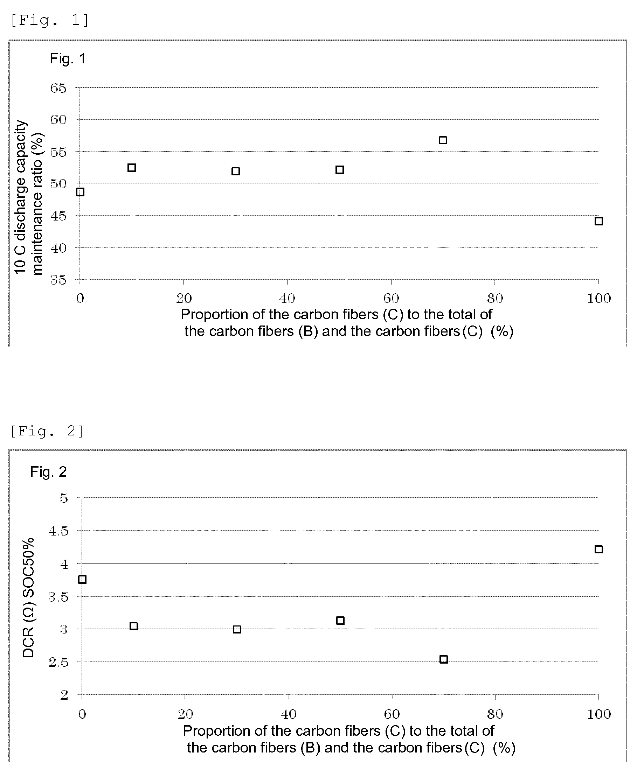

Fig. 1 shows a relationship between a discharge capacity maintenance versus a proportion of the carbon fibers (c) to the total of the carbon fibers (b) and the carbon fibers (c).
Fig. 2 shows a relationship between direct current electric resistance versus a proportion of the carbon fibers (c) to the total of the carbon fibers (b) and the carbon fibers (c).

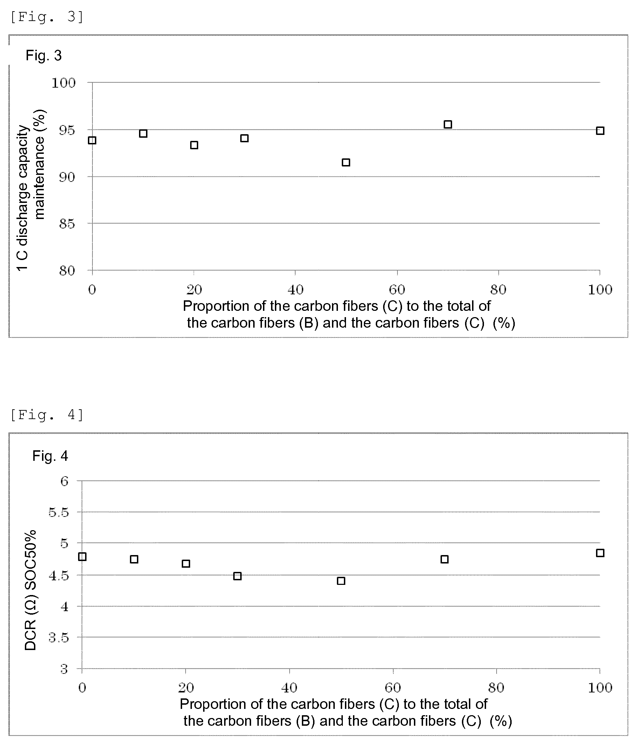

Fig. 3 shows a relationship between a discharge capacity maintenance versus a proportion of the carbon fibers (c) to the total of the carbon fibers (b) and the carbon fibers (c).
Fig. 4 shows a relationship between direct current electric resistance versus a proportion of the carbon fibers (c) to the total of the carbon fibers (b) and the carbon fibers (c).

### DESCRIPTION OF EMBODIMENTS

A method of manufacturing a battery electrode according to one embodiment in the present invention comprises: mixing the active material (A), the carbon fibers (B) with a fiber diameter of not less than 50 nm and not more than 300 nm, the carbon fibers (C) with a fiber diameter of not less than 5 nm and not more than 40 nm, the carbon black (D) and the binder (E) by dry process to obtain a mixture; to the mixture, adding not less than 5/95 and not more than 20/80 by mass of a liquid medium relative to the total mass of the active material (A), the carbon fibers (B), the carbon fibers (C), the carbon black (D) and the binder (E), kneading the mixture to which the liquid medium has been added to obtain a kneaded material ; and shaping the kneaded material into a sheet form.

There is no particular limitation for the active material (A) used for the present invention as long as it is an active material which can be used for a positive electrode or a negative electrode of a battery.

There is no particular limitation for active materials for a positive electrode of a lithium ion battery, that is positive electrode active materials, as long as they are materials capable of intercalating and deintercalating lithium ions. Examples thereof include lithium-containing composite oxides and composite oxides containing lithium and at least one element selected from the group consisting of Co, Mg, Cr, Mn, Ni, Fe, Al, Mo, V, W and Ti. For example, cobalt based oxides such as lithium cobaltate, manganese based oxides such as lithium manganate, nickel based oxides such as lithium nickelate, vanadium based oxides such as lithium vanadate, vanadium pentaoxide, and other composite oxides, mixtures thereof can be used.

In addition, metal sulfides such as titanium sulfide and molybdenum sulfide, and iron olivine based compounds such as LiFePO₄ also can be used.

The positive electrode active material has a median diameter (D₅₀) of preferably 10 µm or less, more preferably 8 µm or less, even more preferably 7 µm or less in view of an effective charge and discharge reaction at high current. There is no particular limitation for the lower limit of the median diameter of the positive electrode active material, but is preferably 50 nm, more preferably 60 nm in view of the packing density of the electrode and the capacity. The median diameter (D₅₀) is a 50% particle diameter in volume based accumulative particle size distribution as measured by a laser diffraction particle size measuring system.

As active materials for a negative electrode of a lithium ion battery, that is negative electrode active materials, materials capable of intercalating and deintercalating lithium ions, preferably carbon materials capable of intercalating and deintercalating lithium ions; Si simple substance, Sn simple substance, alloys containing Si or Sn, or oxides containing Sn or Si can be used.

Examples of the carbon materials capable of intercalating and deintercalating lithium ions include natural graphite; artificial graphite which can be produced by heat-treating petroleum based coke and coal based coke; hard carbon which can be produced by carbonizing resin; and mesophase pitch based carbon materials. The natural graphite or artificial graphite is preferably 0.335 to 0.337 nm in a d₀₀₂ by powder X-ray diffraction in view of battery capacity.

Examples of the alloys containing Si include SiB₄, SiB₆, Mg₂Si, Ni₂Si, TiSi₂, MoSi₂, CoSi₂, NiSi₂, CaSi₂, CrSi₂, Cu₅Si, FeSi₂, MnSi₂, VSi₂, WSi₂ and ZnSi₂.

The median diameter (D₅₀) of the negative electrode active material is preferably not more than 10 µm, more preferably not less than 0.1 µm and not more than 10 µm, even more preferably not less than 1 µm and not more than 7 µm in view of charge and discharge efficiency at high current.

The amount of the active material (A) which can be contained in an electrode is preferably not less than 85 % by mass and not more than 95 % by mass relative to the mass of the electrode in view of the capacity of the battery, the electric resistance of the electrode, and a change in the volume of the electrode upon charging and discharging.

The carbon fibers (B) used for the present invention have a fiber diameter in the range of not less than 50 nm and not more than 300 nm, preferably in the range of not less than 70 nm and not more than 200 nm.

The aspect ratio (= the mean fiber length / the mean fiber diameter) of the carbon fibers (B) is preferably not less than 20 and not more than 150, more preferably not less than 40 and not more than 120, even more preferably not less than 50 and not more than 100 in view of electric conductivity.

The BET specific surface area of the carbon fibers (B) is preferably not less than 6 m²/g and not more than 40 m²/g, more preferably not less than 8 m²/g and not more than 25 m²/g, even more preferably not less than 10 m²/g and not more than 20 m²/g. Further, the C₀ value of the carbon fibers (B) is preferably not less than 0.676 nm and not more than 0.680 nm in view of electric conductivity.

The carbon fibers (B) used for the present invention is not particularly limited by synthesis methods thereof. For example, the carbon fibers (B) can be carbon nanofibers synthesized by gas phase methods, or can be those prepared by graphitizing the carbon nanofibers synthesized by gas phase methods. Among the gas phase methods, the carbon nanofibers synthesized by the floating catalyst method are preferred. The graphitization of the carbon nanofibers is preferably performed by a method comprising heat-treating the carbon nanofibers synthesized by gas phase methods at 2000°C or higher under an inert atmosphere.

The floating catalyst method is a method in which carbon fibers are obtained by introducing a raw material liquid or a gasification product thereof where ferrocene and a sulfur compound as a catalyst source is dispersed in benzene as a carbon source into a flow reactor furnace heated at 1000°C or higher using carrier gas such as hydrogen. Generally, a hollow tube is formed starting at the catalyst metal in the initial stage of the reaction, and an approximate length of the carbon fiber is determined. Subsequently, pyrolyzed carbon is deposited on the surface of the hollow tube, and the growth of the fiber in a radial direction progresses, forming a growth ring-like carbon structure. Therefore, the fiber diameter can be adjusted by controlling a deposited amount of the pyrolyzed carbon on the carbon fibers during the reaction: i.e. a reaction time, a concentration of the raw material in the atmosphere and a reaction temperature. Since the carbon nanofibers obtained by this reaction are covered with pyrolyzed carbon having low crystallinity, the electric conductivity may be low. Accordingly, in order to increase the crystallinity of the carbon fibers, preferably, heat treatment is performed at 800 to 1500°C under an inert gas atmosphere such as argon, and then graphitization treatment is performed at 2000 to 3000°C. The graphitization treatment allows evaporative removal of the catalyst metal to make the carbon fibers highly pure.

For the carbon fibers (B) obtained in this way, the length of the fibers can be adjusted by a mill, or branches of the branched carbon fibers can be snapped. Since the carbon fibers (B) with less branching have weak interference between the fibers, lumps in which the carbon fibers (B) are entangled can be easily compressed, and the lumps can be easily untangled for dispersion.

The amount of the carbon fibers (B) is preferably not less than 0.5 part by mass and not more than 20 parts by mass, more preferably not less than 1 part by mass and not more than 15 parts by mass relative to 100 parts by mass of the active material (A).

The carbon fibers (C) used for the present invention have a fiber diameter in the range of not less than 5 nm and not more than 40 nm, preferably in the range of not less than 7 nm and not more than 20 nm, more preferably in the range of not less than 9 nm and not more than 15 nm.

The carbon fibers (C) may have a tubular structure in which a graphene sheet comprising carbon six membered rings is rolled in parallel to the fiber axis, a platelet structure in which a graphene sheet is perpendicularly arranged to the fiber axis or a herringbone structure in which a graphene sheet is rolled with an oblique angle relative to the fiber axis. Among these, the carbon fibers (C) with a tubular structure are preferred in view of electric conductivity and mechanical strength.

The aspect ratio of the carbon fibers (C) is preferably not less than 150, more preferably not less than 150 and not more than 1000, even more preferably not less than 400 and not more than 1000 in view of efficient formation of electrically conductive networks and dispersibility.

The BET specific surface area of the carbon fibers (C) is preferably not less than 50 m²/g and not more than 380 m²/g, more preferably not less than 100 m²/g and not more than 340 m²/g, even more preferably not less than 150 m²/g and not more than 280 m²/g. Further, the C₀ value of the carbon fibers (C) is preferably not less than 0.680 nm and not more than 0.690 nm in view of the flexibility and dispersibility of the carbon fibers.

The carbon fibers (C) are not particularly limited by synthesis methods thereof. For example, the carbon fibers (C) can be synthesized by gas phase methods. Among the gas phase methods, they are preferably synthesized by the supported catalyst method. The supported catalyst method is a method in which carbon fibers are manufactured by reacting with a carbon source in the gas phase using catalyst where catalyst metals are supported on inorganic supports. Examples of the inorganic supports include alumina, magnesia, silica titania, calcium carbonate and the like. The inorganic support is preferably in a form of powdered granular material. Examples of the catalyst metal elements include iron, cobalt, nickel, molybdenum and vanadium. Supporting can be performed by impregnating the support with a solution of a compound comprising the catalyst metal element, by performing co-precipitation of a solution of a compound comprising the catalyst metal element and a compound comprising an element which constitutes the inorganic support, or by other known methods of supporting. The carbon sources may include methane, ethylene, acetylene and the like. The reaction can be performed in a reaction vessel such as fluid bed, moving bed and fixed bed. A temperature during the reaction is preferably set at 500°C to 800°C. Carrier gas can be used in order to supply a carbon source to a reaction vessel. Examples of the carrier gas include hydrogen, nitrogen, argon and the like. A reaction time is preferably for 5 to 120 minutes. Since fibers are formed starting at the catalyst particles in the supported catalyst method, the catalyst metal and carrier may be contained in the resulting carbon fibers (C). Therefore, the catalyst metal and carrier are preferably removed by performing high temperature treatment of the synthesized carbon fibers at 2000 to 3500°C under an inert atmosphere, or by washing with an acid such as nitric acid and hydrochloric acid.

The carbon fibers (C) obtained in this way can be subjected to pulverization treatment with a pulverizer, a bantam mill or a jet mill to untangle the entangled fibers for dispersion.

The amount of the carbon fibers (C) is preferably not less than 0.1 part by mass and not more than 10 parts by mass, more preferably not less than 0.5 part by mass and not more than 5 parts by mass relative to 100 parts by mass of the active material (A).

The carbon black (D) used for the present invention is a powder and granular material which is known as electrically conductive carbon. Examples of the carbon black (D) include acetylene black, furnace black and Ketjen black. The carbon black (D) having less metal impurities is preferred.

The carbon black (D) has a number average primary particle diameter of preferably not less than 20 nm and not more than 100 nm, more preferably not less than 30 nm and not more than 50 nm.

The amount of the carbon black (D) is not less than 1 parts by mass and not more than 10 parts by mass relative to 100 parts by mass of the active material (A).

Further, the total amount of the carbon fibers (B), the carbon fibers (C) and the carbon black (D) which can be contained in an electrode is preferably not less than 2 % by mass and not more than 10 % by mass relative to the mass of the electrode in view of electric conductivity, high-speed charge and discharge characteristics, battery capacity and the strength of the electrode.

There is no particular limitation for the binder (E) used for the present invention as long as it is a material which is currently used as a binder for a battery electrode. Examples of the binder (E) include fluorine-containing high molecular weight polymers such as poly(vinylidene fluoride) (PVdF), vinylidene fluoride-hexafluoropropylene copolymer, vinylidene fluoride-chlorotrifluoroethylene copolymer, vinylidene fluoride-tetrafluoroethylene copolymer; and styrene-butadiene rubber (SBR).

The binder (E) may be either in a powder form, a suspension form, an emulsified liquid form or a solution form, but is preferably in a form a dry powder or granular material in order to be efficiently mixed with the active material (A), the carbon fibers (B), the carbon fibers (C) and the carbon black (D) by dry process.

The amount of the binder (E) which can be contained in an electrode is preferably not less than 3 % by mass and not more than 5 % by mass relative to the mass of the electrode in view of the strength and electric resistance of the electrode.

Preferably, the amount of the binder (E) which can be contained in an electrode is appropriately selected depending on the binder (E). For example, in a case where PVdF is used as the binder (E), the amount of the binder (E) which can be contained in an electrode is preferably 0.5 to 20 parts by mass, more preferably 1 to 10 parts by mass relative to 100 parts by mass of the active material (A). Further, in a case where SBR is used as the binder (E), the amount of the binder (E) which can be contained in an electrode is preferably 0.5 to 5 parts by mass, more preferably 0.5 to 3 parts by mass relative to 100 parts by mass of the active material (A).

### «Dry process mixing step»

The active material (A), the carbon fibers (B), the carbon fibers (C), the carbon black (D) and the binder (E) are mixed by dry process. In this dry process mixing, the carbon fibers (B) serve as media which transfer shear stress to the carbon fibers (C), and the carbon fibers (B) are easily untangled. The amount of the carbon fibers (C) in the total amount of 100 % by mass of the carbon fibers (B) and the carbon fibers (C) is preferably not less than 10 % by mass and not more than 70 % by mass in view of functionality as the media.

The dry process mixing is preferably performed by a method in which shearing force (shear stress) can be applied to the carbon fibers (C). In order to apply shearing force, the peripheral velocity of a mixing blade is preferably 20 m/s or more, more preferably 30 m/s or more, for example. There is no particular limitation for the duration of the dry process mixing, but it is preferably less than 20 minutes, more preferably less than 10 minutes.

Examples of dry process mixing devices include devices designed for high speed and high shearing mixing such as paddle mixers, hybridizers, mechano fusion, Nobilta, Wonder blenders and plowshare mixers; devices such as ribbon mixers, screw kneaders, Spartan granulators, Loedige mixers, planetary mixers and multipurpose mixers.

### «Liquid medium addition-kneading step»

Next, a liquid medium is added to a dry process mixture. There is no particular limitation for the liquid medium. The liquid medium preferably can be easily volatilized out of the electrode and easily disposed of since it is to be removed at the time of preparing an electrode. Examples of the liquid medium include water, N-methyl-2-pyrrolidone (NMP), methyl ethyl ketone, dimethylformamide, dimethylacetamide, N,N-dimethylamino propylamine and tetrahydrofuran. In a case where PVdF is used as the binder (E), N-methyl-2-pyrrolidone is preferably used as the liquid medium. In a case where SBR is used as the binder (E), N-methyl-2-pyrrolidone or water is preferably used as the liquid medium.

Additional binder (E) may be contained in the liquid medium. That is, an aqueous solution of the binder (E) such as an emulsified liquid of the binder (E), a suspension of the binder (E), or a solution of the binder (E) can be added to the dry process mixture along with or instead of the addition of the liquid medium.

Further, in a case where water is used as the liquid medium, a thickener may be contained in the water to be added. That is, an aqueous thickener solution can be added to the dry process mixture instead of the addition of water or along with the addition of water or an aqueous solution of the binder (E). Examples of the thickeners include polyethylene glycols, celluloses, polyacrylamides, poly N-vinylamides and poly N-vinyl pyrrolidone. Among these, polyethylene glycols and celluloses such as carboxymethylcellulose (CMC) are preferred, and carboxymethylcellulose (CMC) is particularly preferred. CMC is either a sodium salt or an ammonium salt, any of which may be used.

The mass of the liquid medium to be added is not less than 5/95 and not more than 20/80, more preferably not less than 11/89 and not more than 19/81 relative to the total mass of the active material (A), the carbon fibers (B), the carbon fibers (C), the carbon black (D) and the binder (E). Note that the proportion of the total mass of the active material (A), the carbon fibers (B), the carbon fibers (C), the carbon black (D) and the binder (E) relative to the total mass of the active material (A), the carbon fibers (B), the carbon fibers (C), the carbon black (D), the binder (E) and the liquid medium may be called a solid content concentration.

Kneading is performed while applying shear stress to a mixture to which the liquid medium is added. There is no particular limitation for kneading devices, including, for example, ribbon mixers, screw kneaders, Spartan granulators, Loedige mixers, planetary mixers and multipurpose mixers. Kneading is preferably performed so that aggregates in which the carbon fibers (C) are entangled have a size of less than 10 µm in view of high current load characteristics. In order to apply shearing force, the peripheral velocity of a mixing blade is preferably 20 m/s or more, more preferably 30 m/s or more, for example.

### <<Sheet forming step>>

The kneaded material obtained in this way is shaped into a sheet form. There is no particular limitation for methods of forming a sheet. The methods include, for example, a method in which a paste-like kneaded material placed on a current collector is spread out with a roller; a method in which a paste-like kneaded material is coated and molded by extrusion to a current collector; and a method in which a slurry-like kneaded material is applied to a current collector using a bar coater or a doctor blade, and dried.

The kneaded material can be adjusted to have viscosity suitable for a method of forming a sheet. The viscosity of the kneaded material can be adjusted by adding an additional liquid medium to the kneaded material and performing kneading. For the sheet forming process by application, the viscosity of the kneaded material can be adjusted, for example, to preferably 1,000 to 10,000 mPa·s, more preferably 2,000 to 5,000 mPa·s at 23°C.

Then in order to adjust the density (electrode density) and thickness of the resulting sheet, the sheet can be pressure-treated by roll press or flat press.

There is no particular limitation for current collectors as long as they can be used for a battery electrode. The current collectors may include, for example, foils or meshes of electrically conductive metals such as aluminium, nickel, titanium, copper, platinum, stainless steel; and electrically conductive carbon sheets. Further, a current collector may have an electrically conductive metal foil and an electrically conductive layer coated thereon. The electrically conductive layers may include those comprising an electrical conductivity conferring agent comprising electrically conductive carbon particles; and a binder comprising a polysaccharide such as chitin and chitosan and a cross-linked polysaccharide.

The lithium ion battery according to one embodiment in the present invention has a battery electrode obtained by the manufacturing method according to one embodiment in the present invention described above as a component. The battery electrode according to one embodiment in the present invention comprising the positive electrode active material (A) can be used for a positive electrode, and the battery electrode according to one embodiment in the present invention comprising the negative electrode active material (A) can be used for a negative electrode. In a case where the battery electrode according to one embodiment in the present invention is used only for either one of a positive electrode or a negative electrode, a known electrode can be used for the other negative or positive electrode.

A lithium ion battery usually has at least one selected from the group consisting of nonaqueous electolytes and polyelectrolytes. Note that a lithium ion battery in which a polyelectrolyte is used is called a lithium polymer battery.

The nonaqueous electrolytes include solutions of nonaqueous solvents having lithium salts as a solute. Examples of the lithium salts may include LiClO₄, LiBF₄, LiPF₆, LiAlCl₄, LiSbF₆, LiSCN, LiCl, LiCF₃SO₃, LiCF₃CO₂ and LiN(CF₃SO₂)₂. These lithium salts may be used alone or in combination of two or more.

Mentioned are as the nonaqueous solvents, ethers such as diethyl ether, dibutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol dimethyl ether, ethylene glycol phenyl ether or 1,2-dimethoxyethane; amides such as formamide, N-methylformamide, N,N-dimethylformamide, N-ethylformamide, N,N-diethylformamide, N-methylacetamide, N,N-dimethylacetamide, N-ethylacetamide, N,N-diethylacetamide, N,N-dimethylpropionamide or hexamethyl phosphoryl amide; sulphur-containing compounds such as dimethyl sulfoxide or sulfolane; dialkyl ketones such as methyl ethyl ketone or methyl isobutyl ketone; cyclic ethers such as ethylene oxide, propylene oxide, tetrahydrofuran, 2-methoxytetrahydrofuran or 1,3-dioxolane; carbonates such as ethylene carbonate or propylene carbonate; γ-butyrolactone; N-methylpyrrolidone; other organic solvents such as acetonitrile or nitromethane. Among these, preferred are ethylene carbonate, diethyl carbonate, dimethyl carbonate, methylethyl carbonate, propylene carbonate, butylene carbonate and vinylene carbonate. These solvents may be used alone or in combination of two or more.

The concentration of a solute (a lithium salt) in a nonaqueous electolyte is preferably 0.1 to 5 mol/L, more preferably 0.5 to 3 mol/L.

A polyelectrolyte comprises a polymer compound which forms a matrix, a lithium salt and optionally a plasticizing agent. Examples of the polymer compounds include polyalkylene oxide derivatives of polyethylene oxide or polypropylene oxide or polymers comprising the polyalkylene oxide derivatives; derivatives of poly(vinylidene fluoride), poly(hexafluoropropylene), polycarbonate, phosphoric ester polymers, polyalkyl imine, polyacrylonitrile, poly(meta)acrylic ester, polyphosphazene, polyurethane, polyamide, polyester and polysiloxane and polymers comprising the derivatives.

Among these polymer compounds, those having an oxyalkylene structure, an urethane structure, or a carbonate structure in the molecule such as polyalkylene oxide, polyurethane and polycarbonate are preferred in view of good compatibility with various polar solvents and good electrochemical stability. Further, those having a fluorocarbon group in the molecule such as poly(vinylidene fluoride) and poly(hexafluoropropylene) are preferred in view of stability. These oxyalkylenes, urethanes, carbonates, and fluorocarbon groups may be had in the same macromolecule. The number of repeats of these groups is preferably in the range of 1 to 1000, more preferably in the range of 5 to 100 for each.

The lithium salts used for the polyelectrolyte can include the same compounds as illustrated in the description of the foregoing nonaqueous electolytes. The amount of the lithium salt contained in the polyelectrolyte is preferably 1 to 10 mol/kg, more preferably 1 to 5 mol/kg. Further, the plasticizing agents used for the polyelectrolyte can include the nonaqueous solvents illustrated in the description of the foregoing nonaqueous electolytes.

Further, to the nonaqueous electolytes and the polyelectrolytes, a small amount of a substance undergoing a decomposition reaction when charging a lithium ion battery for the first time may be added. The substances may include, for example, vinylene carbonate (VC), biphenyl, propanesultone (PS), fluoroethylene carbonate (FEC) or ethylene sulfite (ES). The amount to be added is preferably 0.01 to 30 % by mass.

A separator can be provided between the positive electrode and the negative electrode in the lithium ion battery according to one embodiment in the present invention. The separators may include, for example, nonwoven fabrics having polyolefines such as polyethylene and polypropylene as a main component; cloths; microporous films and a combination thereof. The porosity of the separator is preferably 30 to 90 %, more preferably 50 to 80 % in view of ionic conductivity and strength. Further, the thickness of the separator is preferably 5 to 100 µm, more preferably 5 to 50 µm in view of ionic conductivity, battery capacity and strength. The two or more microporous films may be used in combination, or the microporous films may be used in combination with other separators such as nonwoven fabrics.

### EXAMPLES

Examples are shown below to describe the present invention in detail.

### Example 1

### [Positive electrode]

Into a planetary mixer [PRIMIX Corporation], 90 parts by mass of the positive electrode active material (a) [a powder of LiFePO₄, Aleees, the mean particle diameter : 2 µm], 1.8 parts by mass of the carbon fibers (b) [vapor grown carbon fibers, Showa Denko K.K., the mean fiber diameter : 180 nm, the fiber diameter range : 50 to 300 nm, the mean fiber length : 7 µm, the average aspect ratio : 40, the BET specific surface area : 13 m²/g, the tap bulk density : 0.090 g/cm³], 0.2 part by mass of the carbon fibers (c) [vapor grown carbon fibers, Showa Denko K.K., the mean fiber diameter : 12 nm, the fiber diameter range : 5 to 40 nm, the aspect ratio : 160 or more, the BET specific surface area : 260 m²/g, the tap bulk density : 0.025 g/cm³], 3 parts by mass of the carbon black (d) [a powder of electrically conductive carbon, C45, Timcal Graphite & Carbon] and 5 parts by mass of the binder (e) [a powder of poly(vinylidene fluoride), PVdF #1300, Kureha Chemical Industry Co., Ltd.] were introduced, and dry process mixing was performed for 5 minutes at a revolution of 15 rpm.

N-methylpyrrolidone [Showa Denko K.K.] was added to the dry process mixture to adjust the solid content concentration to be 87 % by mass. This was kneaded with a planetary mixer [PRIMIX Corporation] for 30 minutes at a revolution of 45 rpm while applying shear stress.

To the resulting kneaded product, N-methylpyrrolidone [Showa Denko K.K.] was further added and kneaded to prepare a slurry having the optimal viscosity for coating.

The resulting slurry was applied to an aluminum foil in the amount of 12 mg/cm² using a C-type coater, and dried at temperature between 80°C and 120°C. The resulting laminated sheet was punched out in the predetermined size, and the electrode density was adjusted to 2.1 g/cm³ by flat press to obtain a positive electrode.

### [Negative electrode]

Into a planetary mixer [PRIMIX Corporation], 90.5 parts by mass of the negative electrode active material [SCMG^{®} AF-C, Showa Denko K.K., the mean particle diameter : 6 µm], 0.5 part by mass of the carbon fibers (b) [vapor drown carbon fibers, Showa Denko K.K., the mean fiber diameter : 180 nm, the fiber diameter range : 50 to 300 nm, the mean fiber length : 7 µm, the average aspect ratio : 40, the BET specific surface area : 13 m²/g, the tap bulk density : 0.090 g/cm³], 2 parts by mass of the carbon black (d) [a powder of electrically conductive carbon, C45, Timcal Graphite & Carbon] and 7 parts by mass of the binder [a powder of poly(vinylidene fluoride, PVdF #9300, Kureha Chemical Industry Co., Ltd.] were transferred, and mixed by dry process at a revolution of 15 rpm for 5 minutes.

N-methylpyrrolidone [Showa Denko K.K.] was added to the dry process mixture to adjust the solid content concentration to be 80 % by mass. This was kneaded at a revolution of 45 rpm for 30 minutes in a planetary mixer [PRIMIX Corporation] while applying shear stress.

The resulting kneaded product was further kneaded while adding N-methylpyrrolidone [Showa Denko K.K.] to prepare a slurry having the optimal viscosity for coating.

The resulting slurry was applied to a copper foil in the amount of 7 mg/cm² using a C-type coater, and dried at temperature between 80°C and 120°C. The resulting laminated sheet was punched out in the predetermined size, and the electrode density was adjusted to 1.3 g/cm³ by flat press to obtain a negative electrode.

### [Test cell]

A separator (a polypropylene microporous film (Celgard LLC, Celgard 2500), 25 µm) was layered between the positive electrode and the negative electrode in a sandwiched fashion. This was wrapped with laminate aluminium, and then heat-sealed at the three sides. Into this, an electrolytic solution was injected, the remaining side was vacuum-sealed to give a test cell.

As the electrolytic solution, a solution containing a mixed solvent of 3 parts by mass of EC (ethylene carbonate), 2 parts by mass of DEC (diethylene carbonate) and 5 parts by mass of EMC (ethylmethyl carbonate) and containing 1 mol/L of LiPF₆ as an electrolyte was used.

### [Method of measuring a discharge capacity maintenance]

Constant current charge at 1 C was performed from the rest potential to 3.6 V, and after reaching 3.6 V, constant potential charge at 3.6 V was performed. Charge was stopped when the electric current was decreased to 0.02 C.

Constant current discharge was performed at 0.2 C, 1 C and 10 C respectively, and cut off at 2.0 V. A ratio (a discharge capacity maintenance (%)) of the discharge capacity at the 10 C constant current discharge or the 1 C constant current discharge relative to the discharge capacity at the 0.2 C constant current discharge was computed. The results are shown in Table 1.

### [Method of measuring DCR]

Constant current charge at 1 C was performed from the rest potential to 3.6 V, and after reaching 3.6 V, constant potential charge at 3.6 V was performed. Charge was stopped when the electric current was decreased to 0.02 C.

Discharge was performed at a constant current of 0.1 C for 5 hours to adjust the state of charge (SOC) to 50%. Then, discharge was performed for 6 seconds at each electric current of 0.2 C, 0.5 C, 1 C and 2 C. DCR at SOC 50% was determined from the relationship between the four current values (the values for 5 seconds) and the voltage.

### Examples 2 to 4, and Comparative Examples 1 to 4

A positive electrode was manufactured by the same method as in Example 1 except that the recipe was changed as shown in Table 1. Then, a negative electrode was manufactured by the same method as in Example 1, and subsequently a test cell was manufactured. The discharge capacity maintenance and DCR of the test cell were measured. The results are shown in Table 1.

### Comparative Example 5

A positive electrode was manufactured by the same method as in Example 3 except that 90 parts by mass of the positive electrode active material (a), 1 part by mass of the carbon fibers (b), 1 part by mass of the carbon fibers (c), 3 parts by mass of the carbon black (d), 5 parts by mass of the binder (e) and 122 parts by mass of N-methylpyrrolidone were introduced into a planetary mixer and kneaded at a solid content concentration of 45 % by mass. Then, a negative electrode was manufactured by the same method as in Example 1, and subsequently a test cell was manufactured. The discharge capacity maintenance and DCR of the test cell were measured. The results are shown in Table 1.
[Table 1]

**Tab. 1**

| | Positive electrode active material (a) [parts by mass] | Carbon fibers (b) [parts by mass] | Carbon fibers (c) [parts by mass] | Carbon black (d) [parts by mass] | Binder (e) [parts by mass] | Mixing process | Solid content concentration upon kneading % by mass | 10C discharge capacity maintenance [%] | DCR [Ω] |
|---|---|---|---|---|---|---|---|---|---|
| Ex.1 | 90 | 1.8 | 0.2 | 3 | 5 | Dry | 87 | 52.4 | 3.05 |
| Ex.2 | 90 | 1.4 | 0.6 | 3 | 5 | Dry | 87 | 51.9 | 2.99 |
| Ex.3 | 90 | 1.0 | 1.0 | 3 | 5 | Dry | 85 | 52.1 | 3.13 |
| Ex.4 | 90 | 0.6 | 1.4 | 3 | 5 | Dry | 83 | 56.8 | 2.54 |
| Comp.Ex.1 | 90 | 2.0 | 0.0 | 3 | 5 | Dry | 87 | 48.7 | 3.76 |
| Comp.Ex.2 | 90 | 0.0 | 2.0 | 3 | 5 | Dry | 83 | 44.1 | 4.21 |
| Comp.Ex.3 | 90 | 1.0 | 1.0 | 3 | 5 | Dry | 98 | 38.6 | 3.85 |
| Comp.Ex.4 | 90 | 1.0 | 1.0 | 3 | 5 | Dry | 77 | 35.1 | 4.05 |
| Comp.Ex.5 | 90 | 1.0 | 1.0 | 3 | 5 | Wet | 45 | 19.7 | 5.08 |

As shown in Table 1, in a case where the positive electrode is used which is obtained by the method comprising mixing the active material (a), the carbon fibers (b), the carbon fibers (c), the carbon black (d) and the binder [e] by dry process; adding a liquid medium to this so that the solid content concentration is not less than 80 % by mass and not more than 95 % by mass; and performing kneading while applying shear stress (Examples), DCR is low, and the discharge capacity maintenance is high. In addition, the electrode in Examples showed almost no aggregates of the carbon fibers[.1] (c).

### Comparative Example 6

The dry process mixing at a revolution of 1500 rpm for 1 minute with a planetary centrifugal mixer [Thinky Corporation] was substituted for the dry process mixing with a planetary mixer, and the resulting dry process mixture was kneaded at the solid content concentration of 66 % by mass while adding N-methylpyrrolidone to prepare a slurry having the optimal viscosity for coating.

The resulting slurry was applied to an aluminum foil in the amount of 12 mg/cm² using a bar coater, and dried at the temperature of 90°C. The resulting laminated sheet was punched out in the predetermined size, and the electrode density was adjusted to 2.1 g/cm³ by flat press to obtain a positive electrode. Then, a negative electrode was manufactured by the same method as in Example 1, and subsequently a test cell was manufactured. The discharge capacity maintenance and DCR of the test cell were measured. The results are shown in Table 2.

### Comparative Example 7 to 12

A positive electrode was manufactured by the same method as in Comparative Example 6 except that the recipe was changed as shown in Table 2. Then, a negative electrode was manufactured by the same method as in Example 1, and subsequently a test cell was manufactured. The discharge capacity maintenance ratio and DCR of the test cell were measured. The results are shown in Table 2.
[Table 2]

**Tab. 2**

| | Positive electrode active material (a) [parts by mass] | Carbon fibers (b) [parts by mass] | Carbon fibers (c) [parts by mass] | Carbon black (d) [parts by mass] | Binder (e) [parts by mass] | Mixing process | Solid content concentration upon kneading % by mass | 1 C discharge capacity maintenance [%] | DCR [Ω] |
|---|---|---|---|---|---|---|---|---|---|
| Comp.Ex.6 | 90 | 1.8 | 0.2 | 3 | 5 | Dry | 66 | 94.6 | 4.74 |
| Comp.Ex.7 | 90 | 1.6 | 0.4 | 3 | 5 | Dry | 64 | 93.3 | 4.68 |
| Comp.Ex.8 | 90 | 1.4 | 0.6 | 3 | 5 | Dry | 63 | 94.1 | 4.48 |
| Comp.Ex.9 | 90 | 1.0 | 1.0 | 3 | 5 | Dry | 61 | 91.5 | 4.40 |
| Comp.Ex.10 | 90 | 0.6 | 1.4 | 3 | 5 | Dry | 60 | 95.5 | 4.75 |
| Comp.Ex.11 | 90 | 2.0 | 0.0 | 3 | 5 | Dry | 65 | 93.8 | 4.79 |
| Comp.Ex.12 | 90 | 0.0 | 2.0 | 3 | 5 | Dry | 69 | 94.9 | 4.85 |

In a case where kneading is performed with a planetary centrifugal mixer at a solid content concentration of less than 80 % by mass (Comparative Examples), DCR is high, and the discharge capacity maintenance is very low since the cut-off potential is reached immediately upon discharging at 10 C. Note that the capacity maintenance ratio at the 1 C discharge is shown in Table 2. The electrodes from the Comparative Examples showed many aggregates of the carbon fibers (c).

## Claims

1. A method of manufacturing a battery electrode, the method comprising:
mixing an active material A, carbon fibers B having a fiber diameter of not less than 50 nm and not more than 300 nm, carbon fibers C having a fiber diameter of not less than 5 nm and not more than 40 nm, carbon black D and a binder E by dry process to obtain a mixture,
to the mixture, adding not less than 5/95 and not more than 20/80 of a liquid medium by mass relative to the total mass of the active material A, the carbon fibers B, the carbon fibers C, the carbon black D and the binder E,
kneading the mixture to which the liquid medium has been added to obtain a kneaded material, and
shaping the kneaded material into a sheet form.

2. The manufacturing method according to claim 1, further comprising: adding an additional liquid medium to the obtained kneaded material and performing kneading before shaping the kneaded material into a sheet form.

3. The manufacturing method according to claim 1 or 2, wherein the amount of the carbon fibers C is not less than 10 % by mass and not more than 70 % by mass in the total amount of 100 % by mass of the carbon fibers B and the carbon fibers C.

4. The manufacturing method according to any one of claims 1 to 3, wherein the amount of the active material A to be contained in the electrode is not less than 85 % by mass and not more than 95 % by mass relative to the mass of the electrode.

5. The manufacturing method according to any one of claims 1 to 4, wherein the amount of the carbon fibers B is not less than 0.5 part by mass and not more than 20 parts by mass relative to 100 parts by mass of the active material A.

6. The manufacturing method according to any one of claims 1 to 5, wherein the amount of the carbon fibers C is not less than 0.1 part by mass and not more than 10 parts by mass relative to 100 parts by mass of the active material A.

7. The manufacturing method according to any one of claims 1 to 6, wherein the amount of the carbon black D is not less than 1 parts by mass and not more than 10 parts by mass relative to 100 parts by mass of the active material A.

8. The manufacturing method according to any one of claims 1 to 7, wherein the amount of the binder E which can be contained in the electrode is not less than 3 % by mass and not more than 5 % by mass relative to the mass of the electrode.

## Patentansprüche

1. Verfahren zum Herstellen einer Batterieelektrode, welches umfasst:
das Mischen eines aktiven Materials A, von Kohlenstofffasern B mit einem Faserdurchmesser von nicht weniger als 50 nm und nicht mehr als 300 nm, von Kohlenstofffasern C mit einem Faserdurchmesser von nicht weniger als 5 nm und nicht mehr als 40 nm, von Ruß D und eines Bindemittels E durch ein Trockenverfahren unter Bildung eines Gemisches,
das Zugeben von nicht weniger als 5/95 und nicht mehr als 20/80 eines flüssigen Mediums, bezogen auf die Gesamtmasse des aktiven Materials A, der Kohlenstofffasern B, der Kohlenstofffasern C, des Rußes D und des Bindemittels E, zu dem Gemisch,
das Kneten des Gemisches, zu dem das flüssige Medium gegeben worden ist, wobei ein geknetetes Material erhalten wird, und
das Formen des gekneteten Materials in eine Bogenform.

2. Herstellungsverfahren nach Anspruch 1, das außerdem umfasst: das Zugeben eines zusätzlichen flüssigen Mediums zu dem erhaltenen gekneteten Material und das Durchführen eines Knetens vor dem Formen des gekneteten Materials in eine Bogenform.

3. Herstellungsverfahren nach Anspruch 1 oder 2, wobei die Menge der Kohlenstofffasern C nicht weniger als 10 Massen-% und nicht mehr als 70 Massen-% in der Gesamtmenge von 100 Massen-% der Kohlenstofffasern B und der Kohlenstofffasern C ist.

4. Herstellungsverfahren nach einem der Ansprüche 1 bis 3, wobei die Menge des aktiven Materials A, das in der Elektrode enthalten sein soll, nicht weniger als 85 Massen-% und nicht mehr als 95 Massen-%, bezogen auf die Masse der Elektrode, ist.

5. Herstellungsverfahren nach einem der Ansprüche 1 bis 4, wobei die Menge der Kohlenstofffasern B nicht weniger als 0,5 Massenteile und nicht mehr als 20 Massenteile, bezogen auf 100 Massenteile des aktiven Materials A, ist.

6. Herstellungsverfahren nach einem der Ansprüche 1 bis 5, wobei die Menge der Kohlenstofffasern nicht weniger als 0,1 Massenteile und nicht mehr als 10 Massenteile, bezogen auf 100 Massenteile des aktiven Materials A, ist.

7. Herstellungsverfahren nach einem der Ansprüche 1 bis 6, wobei die Menge des Rußes D nicht weniger als 1 Massenteil und nicht mehr als 10 Massenteile, bezogen auf 100 Massenteile des aktiven Materials A, ist.

8. Herstellungsverfahren nach einem der Ansprüche 1 bis 7, wobei die Menge des Bindemittels E, das in der Elektrode enthalten sein kann, nicht weniger als 3 Massen-% und nicht mehr als 5 Massen-%, bezogen auf die Masse der Elektrode, ist.

## Revendications

1. Procédé de fabrication d'une électrode d'accumulateur, le procédé comprenant :
le mélange d'une matière active A, de fibres de carbone B présentant un diamètre de fibre d'au moins 50 nm et d'au plus 300 nm, de fibres de carbone C présentant un diamètre de fibre d'au moins 5 nm et d'au plus 40 nm, de noir de carbone D et d'un liant E par un procédé par voie sèche pour obtenir un mélange,
l'addition au mélange d'au moins 5/95 et d'au plus 20/80 d'un milieu liquide en masse par rapport à la masse totale de la matière active A, des fibres de carbone B, des fibres de carbone C, du noir de carbone D et du liant E,
le malaxage du mélange auquel le milieu liquide a été ajouté pour obtenir un matériau malaxé, et
le façonnage du matériau malaxé dans une forme de feuille.

2. Procédé de fabrication selon la revendication 1, comprenant de plus : l'addition d'un milieu liquide supplémentaire au matériau malaxé obtenu et la réalisation d'un malaxage avant le façonnage du matériau malaxé dans une forme de feuille.

3. Procédé de fabrication selon la revendication 1 ou 2, dans lequel la quantité des fibres de carbone C n'est pas inférieure à 10 % en masse et n'est pas supérieure à 70 % en masse dans la quantité totale de 100 % en masse des fibres de carbone B et des fibres de carbone C.

4. Procédé de fabrication selon l'une quelconque des revendications 1 à 3, dans lequel la quantité de la matière active A à contenir dans l'électrode n'est pas inférieure à 85 % en masse et n'est pas supérieure à 95 % en masse par rapport à la masse de l'électrode.

5. Procédé de fabrication selon l'une quelconque des revendications 1 à 4, dans lequel la quantité des fibres de carbone B n'est pas inférieure à 0,5 partie en masse et n'est pas supérieure à 20 parties en masse par rapport à 100 parties en masse de la matière active A.

6. Procédé de fabrication selon l'une quelconque des revendications 1 à 5, dans lequel la quantité des fibres de carbone C n'est pas inférieure à 0,1 partie en masse et n'est pas supérieure à 10 parties en masse par rapport à 100 parties en masse de la matière active A.

7. Procédé de fabrication selon l'une quelconque des revendications 1 à 6, dans lequel la quantité du noir de carbone D n'est pas inférieure à 1 partie en masse et n'est pas supérieure à 10 parties en masse par rapport à 100 parties en masse de la matière active A.

8. Procédé de fabrication selon l'une quelconque des revendications 1 à 7, dans lequel la quantité du liant E qui peut être contenue dans l'électrode n'est pas inférieure à 3 % en masse et n'est pas supérieure à 5 % en masse par rapport à la masse de l'électrode.
